# EUROPÄISCHE PATENTSCHRIFT

(11) **EP 4 290 096 B1**
(45) Veröffentlichungstag und Bekanntmachung des Hinweises auf die Patenterteilung: **28.08.2024**
(21) Anmeldenummer: 22178024.0
(22) Anmeldetag: 09.06.2022
(51) Int. Cl.: F16F 7/10, F16F 7/104, E04H 9/02, F03D 13/20

(54) **SCHWINGUNGSTILGERANORDNUNG**
VIBRATION ABSORBER ASSEMBLY
DISPOSITIF AMORTISSEUR DE VIBRATIONS

(43) Veröffentlichungstag der Anmeldung: 13.12.2023
(73) Patentinhaber: Wölfel Engineering GmbH & Co. KG., 97204 Höchberg (DE)
(72) Erfinder: Katz, Sebastian, 97082 Würzburg (DE); Engelhardt, Jürgen, 97249 Eisingen (DE)
(74) Vertreter: Keil & Schaafhausen Patentanwälte PartGmbB

(56) Entgegenhaltungen:
- EP-A1- 2 746 483
- WO-A1-2021/237979
- CN-A- 109 707 777
- US-A- 4 807 840
- US-A- 6 019 056
- US-A1- 2018 252 287
- US-A1- 2019 024 535

## Beschreibung

Die vorliegende Erfindung betrifft eine Schwingungstilgeranordnung, insbesondere für hohe schlanke Bauwerke, mit einer tragenden Struktur, einer Tilgermasse, die einen Massenschwerpunkt aufweist, und mit mindestens einem Rad, mit dem die Tilgermasse auf einer konkav gekrümmten, mit der tragenden Struktur verbundenen Schienenanordnung aus einer stabilen Mittellage heraus in zwei entgegengesetzte Richtungen verfahrbar ist.

Eine derartige Schwingungstilgeranordnung ist aus CN 109 707 777 A bekannt.

Eine weitere Schwingungstilgeranordnung ist beispielsweise aus EP 2 746 483 B1 bekannt.

Die Erfindung wird im Folgenden anhand des Einsatzes im Turm einer Windenergieanlage beschrieben. Sie ist aber auch bei anderen hohen und schlanken Bauwerken anwendbar, z.B. bei Schornsteinen, Antennen, Hochhäusern, Türmen oder Offshore-Bauwerken, wie Transformator-Stationen. Unter einem "hohen und schlanken Bauwerk" soll ein Bauwerk verstanden werden, das ein Verhältnis zwischen Höhe und kleinster Breite von mindestens fünf aufweist.

Der Turm einer Windenergieanlage wird zu Schwingungen angeregt, beispielsweise durch Windkräfte oder - bei Offshore-Anlagen - auch durch Wellenkräfte. Dabei schwingt der Turm mit einer relativ niedrigen Frequenz von weniger als 1 Hz. In der Regel weist der Turm einer Offshore-Windenergieanlage eine Frequenz im Bereich von 0,1 bis 0,3 Hz auf. Bei jeder Schwingungsbewegung verbiegt sich der Turm etwas, was auf Dauer zu Problemen führen kann.

Es ist daher bekannt, einen Schwingungstilger zu verwenden, dessen Tilgermasse auf einer gekrümmten Schienenanordnung hin- und herbewegt werden kann. Eine Linie, die durch den Mittelpunkt eines Rads und dem Auflagepunkt des Rades auf der Schienenanordnung verläuft, kreuzt sich mit einer entsprechenden Linie des Rades an einer anderen Position. Der Kreuzungspunkt bildet dann sozusagen die Aufhängung für ein Pendel, so dass ein Abstand zwischen diesem Kreuzungspunkt und dem Massenschwerpunkt, mit anderen Worten die Pendellänge, sehr groß gemacht werden kann.

Jede Schwingungstilgeranordnung muss sehr genau auf ihren Einsatzzweck hin abgestimmt werden. Dabei ist weiterhin zu berücksichtigen, dass die Schwingungstilgeranordnung unterschiedlichen Betriebszuständen ausgesetzt ist. Neben dem "normalen" Einsatz im Dauerbetrieb, muss die Schwingungstilgeranordnung gelegentlich gewartet werden. Die Schwingungstilgeranordnung muss auch transportiert und montiert werden können.

EP 2 746 483 A1 offenbart eine Schwingungstilgeranordnung mit einer Tilgermasse, die einen Massenschwerpunkt aufweist und mit mindestens einem Rad, mit dem die Tilgermasse auf einer konkav gekrümmten, mit der tragenden Struktur verbundenen Schienenanordnung aus einer stabilen Mittellage heraus in zwei entgegengesetzte Richtungen verfahrbar ist.

US 4 807 840 A zeigt eine Schwingungstilgeranordnung mit einer tragenden Struktur oder Schiff, einer Tilgermasse, die einen Massenschwerpunkt aufweist, und mit mindestens einem Rad, mit dem die Tilgermasse auf einer Schienenanordnung in zwei entgegengesetzte Richtungen verfahrbar ist. Weiterhin ist eine Reibdämpfereinrichtung vorgesehen.

US 6 019 056 A zeigt eine Dämpfereinrichtung für ein Schiff, das dessen Rollbewegung dämpfen soll. Die Dämpfungseinrichtung weist eine Masse auf, die mit Rädern auf einer gekrümmten Bahn aus einer stabilen Mittellage heraus in zwei entgegengesetzte Richtungen verfahrbar ist. Es ist ein magnetischer Dämpfer vorgesehen.

Rädern auf einer gekrümmten Bahn aus einer stabilen Mittellage heraus in zwei entgegengesetzte Richtungen verfahrbar ist. Es ist ein magnetischer Dämpfer vorgesehen.

US 2018/0252287 A1 zeigt einen weiteren Schwingungsdämpfer mit einer rotierenden Masse, wobei die rotierende Masse an einem Halter befestigt ist, der auf einer konkav gekrümmten Schiene bewegbar ist.

Der Erfindung liegt die Aufgabe zugrunde, eine Schwingungstilgeranordnung auf einfache Weise an unterschiedliche Betriebserfordernisse anpassen zu können.

Diese Aufgabe wird gelöst durch eine Schwingungstilgeranordnung mit den Merkmalen des Anspruchs 1.

Erfindungsgemäß ist eine verstellbare Reibdämpfereinrichtung vorgesehen, die zwischen einem ersten Zustand, in dem sie nicht oder nur dämpfend mit der Tilgermasse zusammenwirkt, und einem zweiten Zustand, in dem sie eine Bewegung der Tilgermasse kontrolliert zum Stillstand bringt, verstellbar ist.

Mit einer derartigen Reibdämpfereinrichtung ist es zum einen möglich, die Tilgerdämpfung zu erhöhen, falls dies erforderlich ist. Zum anderen kann man die Reibdämpfereinrichtung auch dazu verwenden, die Tilgermasse so weit abzubremsen, dass sie auch bei Anregungen der tragenden Struktur von außen zum Stillstand kommt, wenn dies für Wartungszwecke erforderlich ist. Man vermeidet dabei ein hartes Abbremsen oder Blockieren der Tilgermasse, was wiederum zu einer unerwünschten großen Belastung der tragenden Struktur führen würde. Wenn man die Reibdämpfereinrichtung außer Eingriff mit der Tilgermasse bringt, dann nimmt die Reibdämpfereinrichtung keinen Einfluss auf die Tilgerdämpfung. Allerdings lässt sich durch die Verstellung der Reibdämpfereinrichtung die Dämpfung der Schwingungstilgeranordnung auf unterschiedliche Betriebszustände der tragenden Struktur, z.B. unterschiedliche Turmfrequenzen, einstellen.

Die Reibdämpfereinrichtung weist eine Vorspannfederanordnung auf, die zwischen einer Verstellvorrichtung und mindestens einem Reibbelagelement angeordnet ist. Die Verstellvorrichtung wirkt also über die Vorspannfederanordnung auf das Reibbelagelement oder die Reibbelagelemente. Die Vorspannfederanordnung ist dabei relativ weich. Mit "weicher" Vorspannfederanordnung ist gemeint, dass die Vorspannfederanordnung stark vorgespannt werden muss um eine hohe Kraft zu erzielen bzw. im Umkehrschluss dann wenig Kraftänderung erfährt, wenn sie gegenüber dem Vorspannweg kleine Wegänderungen erfährt, bspw. wenn der Reibbelag verschleißt. Dies sorgt dafür, dass die eingestellte Reibdämpfung robust, d.h. wenig sensitiv, auf Änderungen des Vorspannwegs reagiert, was günstig für die Tilgerwirksamkeit ist.

Vorzugsweise weist das Reibbelagelement eine nutzbare Dicke auf und die Vorspannfederanordnung weist eine Federkonstante auf, bei der sich die Federkraft der Vorspannfederanordnung zwischen einer ersten Federlänge und einer zweiten Federlänge, die eine Summe aus der ersten Federlänge und der nutzbaren Dicke ist, um weniger als 10 % ändert. Das Reibbelagelement reibt bei einer Bewegung der Tilgermasse gegenüber der Tilgermasse und wird dadurch abgenutzt und verschleißt. Die Vorspannfederanordnung kompensiert den Verschleiß des Reibbelagelements, ohne die Dämpfungswirkung der Schwingungstilgeranordnung in unzulässiger Weise zu verändern. Höhere Frequenzen der tragenden Struktur erfordern mehr Dämpfung. Dies wird durch die Einstellbarkeit der Dämpfungswirkung berücksichtigt.

Bevorzugterweise überdrückt die Verstellvorrichtung die Vorspannfederanordnung in der zweiten Position. Überdrückt bedeutet hier, dass die Vorspannfederanordnung deutlich stärker gedrückt wird, als dies für eine Dämpfungseinstellung des Tilger benötigt ist. Die Funktion hier ist dann lediglich ein Bremsen des Tilgers, keine Dämpfungseinstellung mehr. Prinzipiell muss dieses Andrücken auch nicht ausschließlich über die Feder erfolgen. In der zweiten Position ist die Vorspannfederanordnung so weit zusammengedrückt, dass die Wirkung der Verstellvorrichtung unmittelbar auf das Reibbelagelement übertragen wird. Bei Verwendung einer Schraubendruckfeder als Vorspannfederanordnung ist die Schraubendruckfeder in der zweiten Position vollständig zusammengedrückt. Wenn andere Federn als Vorspannfederanordnung verwendet werden, lässt sich eine vollständige Kompression, die eine weitere Kompression nicht mehr zulässt, in der Regel nicht erreichen. Gleichwohl kann auch in diesem Fall die Verstellvorrichtung praktisch unmittelbar auf die Tilgermasse wirken.

Auch ist bevorzugt, dass die Vorspannfederanordnung eine erste Feder und eine zweite Feder aufweist, die in Reihe angeordnet sind und unterschiedliche Steifigkeiten aufweisen. Die weichere Feder wird zur gezielten Einstellung der Dämpfung verwendet. Die härtere Feder, die beispielsweise mindestens 5 mal steifer als die weiche Feder ist, wird für das kontrollierte Abbremsen der Tilgermasse verwendet, wenn die Tilgermasse zum Stillstand gebracht werden soll. In diesem Fall wird zunächst die weiche Feder komprimiert. Nach Ausnutzung des verfügbaren Federwegs der weichen Feder wird die steifere Feder komprimiert. Durch die Anordnung der zusätzlichen steiferen Feder wird eine definierte Bremskraft erzeugt und verhindert, dass es zu einem Blockieren zwischen Tilgermasse und Bremse kommt.

In einer bevorzugten Ausgestaltung ist vorgesehen, dass das mindestens eine Reibbelagelement mit einer in Schwerkraftrichtung ausgerichteten Reibfläche zusammenwirkt. Das Reibbelagelement wirkt also in horizontaler Richtung auf die Reibfläche. Damit wird vermieden, dass eine in Schwerkraftrichtung auf die Tilgermasse wirkende Kraft das Schwingungsverhalten der Tilgermasse in unerwünschter Weise beeinflusst. Die Tilgerfrequenz wird also nicht durch eine zusätzliche "Gewichtskraft" beeinflusst. Die Reibfläche muss dabei nicht exakt in Schwerkraftrichtung ausgerichtet sein. Kleinere Abweichungen der Reibfläche von der Schwerkraftrichtung sind zulässig, solange eine vom Reibbelagelement auf die Reibfläche in Schwerkraftrichtung ausgeübte Kraft sich nicht in unerwünschter Weise auf das Schwingungsverhalten der Tilgermasse auswirkt.

In einer bevorzugten Ausgestaltung ist vorgesehen, dass die Tilgermasse eine Nut aufweist und die Reibfläche eine Seitenwand der Nut bildet. Das Reibbelagelement ist dann in der Nut angeordnet. Vorzugsweise sind hier zwei Reibbelagelemente vorgesehen, die auf gegenüberliegende Seitenwände der Nut wirken. Wenn die Reibdämpfereinrichtung auf die Tilgermasse wirkt, dann werden die Reibbelagelemente gegen die Seitenwände der Nut verspannt.

Vorzugsweise weist die Verstellvorrichtung ein Winkelgetriebe auf, insbesondere ein Schneckengetriebe. Die Verstellvorrichtung kann dann nach wie vor in Schwerkraftrichtung von oben betätigt werden, was die Einstellung der Reibdämpfereinrichtung erleichtert.

Vorzugsweise ist eine Arretiervorrichtung vorgesehen, mit der die Tilgermasse gegenüber der tragenden Struktur festlegbar ist, insbesondere in mehreren unterschiedlichen Positionen. Wenn die Reibdämpfereinrichtung die Tilgermasse zum Stillstand gebracht hat, wird zusätzlich die Arretiervorrichtung verwendet, um eine Bewegung der Tilgermasse zu verhindern. Die Arretiervorrichtung kann eine größere Haltekraft auf die Tilgermasse ausüben als die Reibdämpfereinrichtung. Eine Gefährdung eines Wartungspersonals wird dadurch vermieden.

Vorzugsweise ist eine Neigungseinstelleinrichtung vorgesehen, mit der eine Neigung der Schwingungstilgeranordnung gegenüber der tragenden Struktur veränderbar ist. Durch diese Neigungskompensation kann die Schwingungstilgeranordnung auch dann bestimmungsgemäß arbeiten, wenn das Bauwerk, beispielsweise der Turm einer Windenergieanlage, nicht genau vertikal ausgerichtet ist. Eine genaue vertikale Ausrichtung ist in vielen Fällen nur mit großen Schwierigkeiten zu erreichen. Durch die veränderbare Neigung der Schwingungstilgeranordnung ist dies aber kein Problem mehr.

Vorzugsweise weist die Schwingungstilgeranordnung eine Einhausung auf, die mit der tragenden Struktur verbunden ist, wobei die Neigungseinstelleinrichtung insbesondere auf die Einhausung wirkt. Die Einhausung sorgt dafür, dass die Schwingungstilgeranordnung sozusagen einen "Block" bildet, der als Einheit gehandhabt werden kann, was den Transport und die Montage erleichtert. Insbesondere erlaubt die Einhausung, dass die Schwingungstilgeranordnung immer eine vorbestimmte Ausrichtung zur Schwerkraft beibehält, also auch bei Transport und Montage. Das Risiko, dass die Schwingungstilgeranordnung versehentlich auf eine Seite gelegt oder hochkant gestellt wird, ist dabei stark vermindert.

Vorzugsweise ist zwischen der Tilgermasse und einem Endanschlag eine Anprallpufferanordnung vorgesehen, die eine mit der tragenden Struktur verbundene Krafteinleitungseinrichtung aufweist. Das Anschlagen der Tilgermasse an die tragende Struktur wird durch die Anprallpufferanordnung mit relativ langem Weg abgemildert. Die Anprallpufferanordnung kann Federelemente aus Stahl oder Elastomer aufweisen. Um die Anprallkräfte der Tilgermasse von der Einhausung fernzuhalten, werden die Anprallkräfte durch die Krafteinleitungseinrichtung unmittelbar in die tragende Struktur eingeleitet, also bei einer Windenergieanlage in die Anbindung zwischen der Windenergieanlage und der Schwingungstilgeranordnung.

Hierbei ist bevorzugt, dass die Anprallpufferanordnung einen Anpralldämpfer aufweist, wobei der Massenschwerpunkt, der Anpralldämpfer und die Krafteinleitungseinrichtung auf einer Linie liegen, wenn die Tilgermasse die Krafteinleitungseinrichtung erreicht, vorzugsweise auf einer geraden Linie. Damit kann man die Wirkung der Anprallkräfte auf das Rad oder die Räder kleinhalten. Die Belastung des Rades oder der Räder kann damit kleingehalten werden.

Vorzugsweise definiert die Anprallpufferanordnung einen Bremsweg, der mindestens 10 % der Maximalauslenkung der Tilgermasse entspricht. Die Bewegung der Tilgermasse wird an ihrem Ende nicht abrupt gestoppt, sondern die Tilgermasse wird über einen relativ langen Bremsweg abgebremst, so dass Belastungen der tragenden Struktur kleingehalten werden können.

Vorzugsweise ist die Tilgermasse über eine Zusatzfedereinrichtung mit der tragenden Struktur verbunden, deren Federkraft insbesondere einstellbar ist. Manche Betriebszustände mit einer höheren Eigenfrequenz erfordern eine Erhöhung der Tilgersteifigkeit, die durch das Einbringen der Zusatzfedereinrichtung erhöht werden kann. Durch die Einstellbarkeit der Federkraft der Zusatzfedereinrichtung lässt sich die Tilgersteifigkeit gezielt einstellen.

Vorzugsweise weist die Schienenanordnung eine Krümmung auf, die von einer Kreisbahn abweicht. Bei einer Kreisbahn gibt es eine relativ lineare, d.h. proportional zur Auslenkung der Tilgermasse größer werdende Rückstellkraft. Bei einer nicht kreisförmigen Krümmung kann man eine größere Rückstellkraft gegen Ende des Bewegungsraums erhalten, was wiederum verwendet werden kann, um ein hartes Anschlagen zu vermeiden oder um gezielt eine amplitudenabhängige Frequenzveränderung zu erhalten.

Vorzugsweise weist die Schwingungstilgeranordnung einen Wirbelstromdämpfer mit einer Magnetanordnung und einer elektrischen Leiteranordnung auf, wobei sich die Magnetanordnung und die Leiteranordnung bei einer Bewegung der Tilgermasse gegenüber der tragenden Struktur relativ zueinander bewegen. Die Magnetanordnung kann beispielsweise an der Tilgermasse angeordnet sein, während die Leiteranordnung stationär angeordnet ist. Wenn sich die Magnetanordnung relativ zur Leiteranordnung bewegt, werden in der Leiteranordnung Wirbelströme induziert, die wiederum der Schwingungsbewegung der Tilgermasse Energie entziehen und damit zur Dämpfung beitragen. Es ist auch möglich, die Leiteranordnung an dem Rad oder den Rädern anzuordnen, so dass sich die Relativbewegung zwischen der Leiteranordnung und der Magnetanordnung durch eine Drehung des Rads oder der Räder ergibt.

In einer bevorzugten Ausgestaltung ist vorgesehen, dass die Schienenanordnung eine erste Schienenanordnung ist, die Tilgermasse eine erste Tilgermasse ist und eine zweite Tilgermasse auf einer konkav gekrümmten, mit der tragenden Struktur verbundenen und quer zur ersten Schienenanordnung gerichteten zweiten Schienenanordnung aus einer stabilen Mittellage heraus in zwei entgegengesetzte Richtungen verfahrbar ist, wobei die erste Tilgermasse und die erste Schienenanordnung in einer ersten Einhausung angeordnet sind, die zweite Tilgermasse und die zweite Schienenanordnung in einer zweiten Einhausung angeordnet sind und die erste Einhausung und die zweite Einhausung in Schwerkraftrichtung übereinander angeordnet sind. Man verwendet also eine Schwingungstilgeranordnung mit zwei Schwingungstilgern, die im Wesentlichen gleich aufgebaut, aber mit unterschiedlichen Schwingungsrichtungen angeordnet sind. Durch die Kombination der beiden Schwingungstilger lässt sich dann eine Schwingungsdämpfung in praktisch allen Richtungen senkrecht zur Schwerkraftrichtung erreichen.

Hierbei ist bevorzugt, dass die zweite Einhausung in Richtung der ersten Schienenanordnung außermittig zur ersten Einhausung angeordnet ist und/oder die erste Einhausung in Richtung der zweiten Schienenanordnung außermittig zur zweiten Einhausung angeordnet ist. Die beiden Einhausungen liegen dann nicht mit ihren Mitten in Schwerkraftrichtung übereinander, sondern sind seitlich zueinander versetzt angeordnet. Dies ist insbesondere bei der Verwendung der Schwingungstilgeranordnung in einer Windenergieanlage von Vorteil, weil man hier in der Regel ein Kabel möglichst in der Mitte des Turms der Windenergieanlage führen möchte. Die beiden Schwingungstilger sind dann seitlich neben dem Kabel angeordnet.

Die Erfindung wird im Folgenden anhand eines bevorzugten Ausführungsbeispiels in Verbindung mit einer Zeichnung näher beschrieben. Hierin zeigen:
- Fig. 1: eine schematische Darstellung einer Schwingungstilgeranordnung ohne Eingriff mit einer Reibdämpfereinrichtung,
- Fig. 2: die Schwingungstilgeranordnung nach Fig. 1 mit Eingriff der Reibdämpfereinrichtung und mit Zusatzfedern,
- Fig. 3: die Schwingungstilgeranordnung mit aktivierter Arretiereinrichtung,
- Fig. 4: eine schematische Schnittdarstellung eines Turms einer Windenergieanlage,
- Fig. 5: eine schematische Darstellung einer Vorspannfederanordnung,
- Fig. 6: eine Seitenansicht einer abgewandelten Ausführungsform und
- Fig. 7: eine Vorderansicht der Ausführungsform nach Fig. 6.

In allen Figuren sind gleiche und einander entsprechende Elemente mit den gleichen Bezugszeichen versehen. Aus Gründen der Übersicht sind nicht alle Elemente in allen Figuren dargestellt.

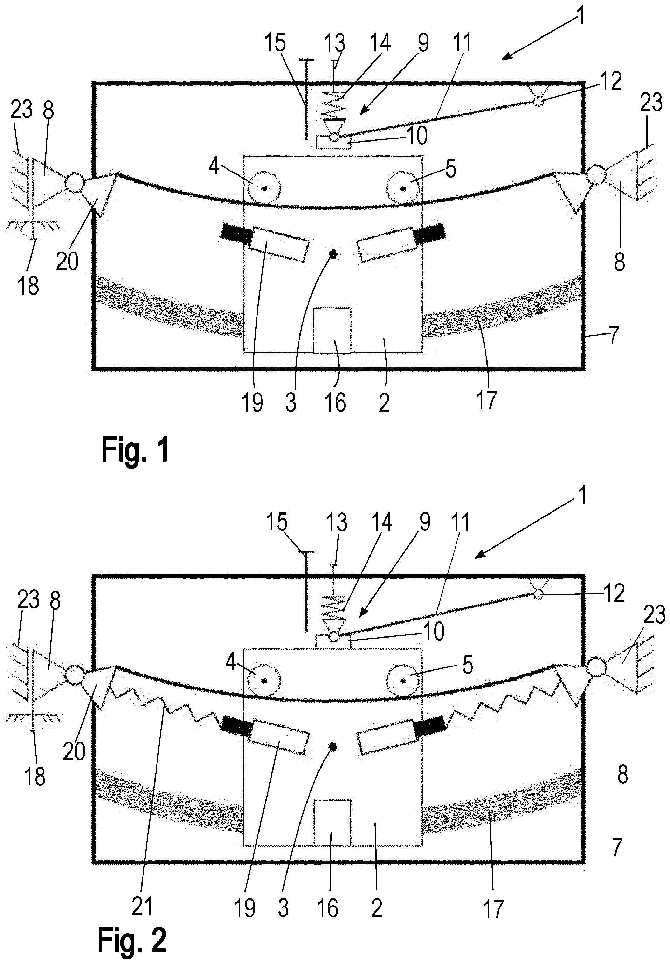

Fig. 1 zeigt schematisch eine Schwingungstilgeranordnung 1, die beispielsweise in einem Turm 23 einer Windenergieanlage eingesetzt werden kann. Die Schwingungstilgeranordnung 1 ist aber auch bei anderen hohen und schlanken Bauwerken einsetzbar, bei denen ein Verhältnis von Höhe zu kleinster Breite mindestens fünf beträgt. In Fig. 1 ist der Turm der Windenergieanlage 2 als tragende Struktur schematisch eingezeichnet.

Die Schwingungstilgeranordnung 1 weist eine Tilgermasse 2 mit einem Massenschwerpunkt 3 auf. Die Tilgermasse 2 kann eine Masse von mehreren Tonnen aufweisen. Sie kann beispielsweise aus Beton, aus Stahl, einer Kombination von Stahl und Beton oder aus anderen Materialien gebildet sein.

Die Tilgermasse 3 weist zwei Radpaare 4, 5 auf. Von jedem Radpaar 4, 5 sind nur die auf der in der Zeichnung dargestellten Seite der Tilgermasse 2 befindlichen Räder 4, 5 sichtbar. Die Räder 4, 5 sind auf einer Schienenanordnung 6 angeordnet. Die Schienenanordnung 6 ist gekrümmt. Im vorliegenden Fall ist die Krümmung kreisförmig. Die Krümmung der Schienenanordnung 6 kann aber auch von der Kreisform abweichen. Insbesondere kann sich der Krümmungsradius zu den beiden Enden der Schienenanordnung 6 hin verkleinern, so dass Rückstellkräfte auf die Tilgermasse 2 größer werden, wenn sich die Tilgermasse 2 dem jeweiligen Ende der Schienenanordnung 6 nähert.

Die Tilgermasse 2 und die Schienenanordnung 6 sind in einer Einhausung 7 angeordnet, die über eine Anbindung 8 mit dem Turm 23 der Windenergieanlage verbunden ist. Die Schienenanordnung 6 kann dabei auch unmittelbar mit der Anbindung 8 verbunden sein.

Eine Reibdämpfereinrichtung 9 ist vorgesehen, die ein Reibbelagelement 10 aufweist, das an einer Schwinge 11 gelagert ist, die um einen an der Einhausung 7 angeordneten Drehpunkt 12 verschwenkbar ist. Damit lässt sich das Reibbelagelement 10, wie in Fig. 1 dargestellt, von der Tilgermasse 2 abheben, oder, wie in Fig. 2 dargestellt, an der Tilgermasse 2 zur Anlage bringen.

Zum Verstellen der Position des Reibbelagelements 10 ist eine Verstellvorrichtung 13 vorgesehen, die über eine Vorspannfederanordnung 14 auf das Reibbelagelement 10 wirkt. Die Vorspannfederanordnung 14 ist relativ weich ausgebildet.

Es ist auch möglich, das Reibbelagelement 10 an der Tilgermasse 2 anzubringen und eine Schiene oder ein anderes Gegenstück mit der Einhausung 7 zu verbinden. In diesem Fall wirkt die Vorspannfederanordnung 14 auf die Schiene und drückt sie gegen das Reibbelagelement 10.

Das Reibbelagelement 10 weist eine nutzbare Dicke auf. Die nutzbare Dicke kann beispielsweise dadurch definiert sein, dass das Reibbelagelement 10 einen nicht näher dargestellten Reibbelag aufweist, der im Laufe der Zeit verschleißt. Der zulässige Verschleiß definiert die nutzbare Dicke. Die Vorspannfederanordnung 14 des Reibbelagelements 10 weist dementsprechend eine Federkonstante auf, die so ausgebildet ist, dass sich die von der Vorspannfederanordnung 14 auf das Reibbelagelement 10 ausgeübte Kraft auch bei einem Verschleiß des Reibbelagelements 10 nicht oder nur in einem kleinen zulässigen Maß ändert. Das kleine zulässige Maß liegt bei maximal 10 %.

Die Verstellvorrichtung 13 kann weiterhin dazu genutzt werden, das Reibbelagelement 10 mit einer deutlich größeren Kraft gegen die Tilgermasse 2 zu drücken. In diesem Fall wird die Vorspannfederanordnung 14 überdrückt. Das bedeutet, dass die Feder 14 so weit komprimiert wird, dass eine Bewegung der Verstelleinrichtung 13 praktisch unmittelbar auf das Reibbelagelement 10 übertragen wird, die Vorspannfederanordnung 14 also nicht weiter komprimiert werden kann. Man kann also das Reibbelagelement 10 auch noch dafür verwenden, die Tilgermasse 2 kontrolliert abzubremsen, auch wenn der Turm 23 weiter zu Schwingungen angeregt wird. Das Abbremsen kann dabei allmählich erfolgen, so dass ein schlagartiges Abbremsen der Tilgermasse 2 aus voller Geschwindigkeit vermieden werden kann. Ein derartiges schlagartiges Abbremsen aus voller Geschwindigkeit würde zu einer unzulässig hohen Belastung auf die tragende Struktur führen.

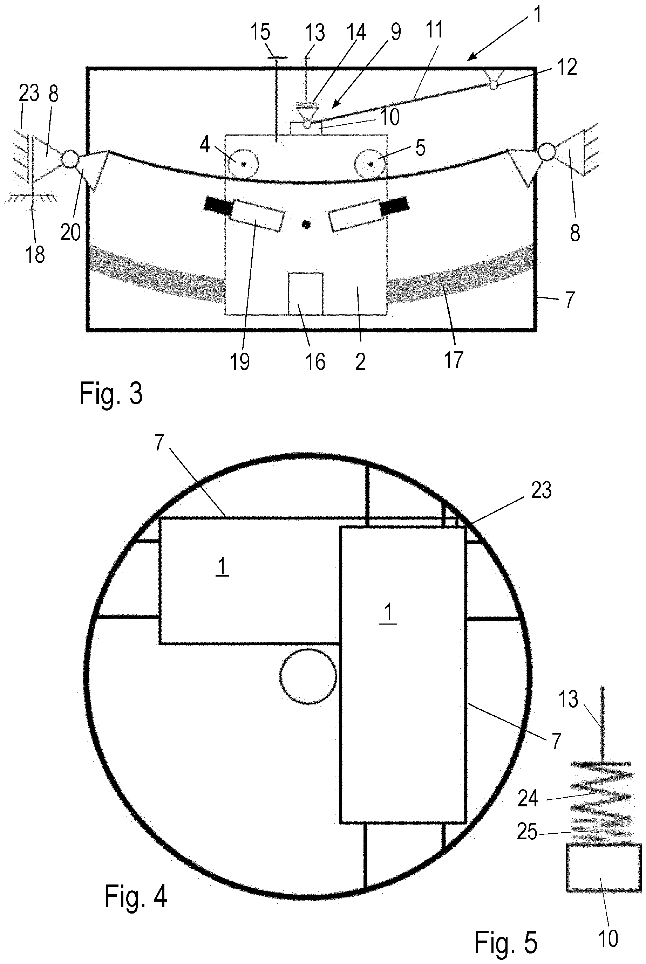

Wie in Fig. 5 dargestellt, weist die Vorspannfederanordnung14 eine erste Feder 24 und eine zweite Feder 25 auf. Die beiden Federn 24, 25 sind in Wirkrichtung hintereinander angeordnet oder in Reihe geschaltet. Die beiden Federn 24, 25 weisen unterschiedliche Steifigkeiten auf. Die Feder 24 ist weicher oder weniger steif und wird zur gezielten Einstellung der Dämpfung verwendet. Die härtere oder steifere Feder 25 wird für das kontrollierte Abbremsen der Tilgermasse 2 verwendet. Die steifere Feder 25 ist beispielsweise 6 mal steifer als die weichere Feder 24. Wenn die Tilgermasse 2 kontrolliert zum Stillstand gebracht werden soll, wird durch die Verstellvorrichtung 13 zunächst die weichere Feder 24 komprimiert. Nach Ausnutzung des verfügbaren Federwegs der weicheren Feder 24 wird die steifere Feder 25 komprimiert. Durch die steifere Feder 25 wird eine definierte Bremskraft auf die Tilgermasse 2 erzeugt und es wird verhindert, dass es zum einem Blockieren zwischen der Tilgermasse 2 und dem Reibbelagelement 10 kommt.

Eine Arretiervorrichtung 15 ist vorgesehen, die im "Normalbetrieb" außer Eingriff mit der Tilgermasse 2 steht. Dies ist in den Fig. 1 und 2 dargestellt. Wenn die Tilgermasse 2 durch die Reibdämpfereinrichtung 9 zum Stillstand gebracht worden ist, dann kann man die Arretiervorrichtung 15 in Eingriff mit der Tilgermasse 2 bringen, um die Tilgermasse zuverlässig in ihrer angehaltenen Position zu halten. Dies ist beispielsweise bei Wartungsarbeiten erforderlich. Die Arretiervorrichtung 15 kann formschlüssig oder reibschlüssig auf die Tilgermasse 2 wirken. Vorzugsweise wirkt die Arretiervorrichtung 15 so auf die Tilgermasse 2, dass sie die Tilgermasse 2 in praktisch jeder Position festhalten kann. Die Arretiervorrichtung 15 wirkt mit einer Kraft auf die Tilgermasse 2, die größer ist als die Kraft der Reibdämpfereinrichtung 9 beim Abbremsen der Tilgermasse 2.

An der Tilgermasse 2 ist eine Magnetanordnung 16 angeordnet. In der Einhausung 7 ist eine elektrische Leiteranordnung 17 angeordnet. Wenn sich die Tilgermasse 2 bei einer Schwingbewegung auf der Schienenanordnung 6 bewegt, dann wird die Magnetanordnung 16 an der elektrischen Leiteranordnung 17 vorbeibewegt und induziert dabei Wirbelströme. Die hierzu benötigte Energie wird der Bewegungsenergie der Tilgermasse 2 entzogen. Dies führt zu einer Dämpfung. Durch eine Feinabstimmung der Magnetanordnung 16 und/oder der elektrischen Leiteranordnung 17 lässt sich die durch die Wirbelströme hervorgerufene Dämpfung relativ genau einstellen.

Zumindest an einer Seite der Einhausung 7, d.h. an einem Ende der Schienenanordnung 6, ist eine Neigungseinstellvorrichtung 18 vorgesehen, mit der die Neigung der Einhausung 7 gegenüber dem Turm 23 der Windenergieanlage verstellt werden kann. Damit lässt sich erreichen, dass bei einer symmetrischen Schienenanordnung 6 beide Enden der Schienenanordnung 6 in Schwerkraftrichtung auf der gleichen Höhe angeordnet werden können, auch wenn der Turm 23 nicht exakt vertikal ausgerichtet ist.

Eine Anprallpufferanordnung ist vorgesehen, die einen Anprallpuffer 19 und eine Krafteinleitungseinrichtung 20 aufweist. Im vorliegenden Fall ist der Anprallpuffer 19 an der Tilgermasse 2 angeordnet. Er kann jedoch auch an der tragenden Struktur 8 angeordnet sein. Eine entsprechende Anprallpufferanordnung ist auf der gegenüberliegenden Seite der Tilgermasse 2 vorgesehen. Die Anprallpufferanordnung bewirkt, dass die Geschwindigkeit der Tilgermasse 2 am Ende ihrer Bewegung stärker abnimmt, als dies nur aufgrund der gekrümmten Schienenanordnung 6 der Fall wäre. Damit wird ein hartes Anschlagen der Tilgermasse 2 an die tragende Struktur 8 verhindert. Der Anprallpuffer 19 bildet einen Anpralldämpfer. Wenn die Tilgermasse die Krafteinleitungseinrichtung 20 erreicht, liegen der Massenschwerpunkt 3, der Anprallpuffer 19 und die Krafteinleitungseinrichtung 20 auf einer geraden Linie. Damit wird eine Belastung der Räder 4, 5 kleingehalten.

Die Anprallpufferanordnung definiert einen Bremsweg, der relativ lang ist. Er beträgt mindestens 10 % der Maximalauslenkung der Tilgermasse 2.

In Fig. 2 ist dargestellt, dass die Tilgermasse 2 auch über eine Zusatzfedereinrichtung 21 mit der tragenden Struktur 8 verbunden ist. Die Zusatzfedereinrichtung 21 kann an dem Anprallpuffer 19 angreifen. Sie erhöht zum einen die Tilgersteifigkeit und damit die Tilgerfrequenz. Zum anderen trägt sie dazu bei, die Tilgermasse abzubremsen, wenn sie das Ende der Schienenanordnung 6 erreicht. Hierbei wirken Kräfte von der Zusatzfedereinrichtung 21 auf die Tilgermasse 2, die dadurch verursacht werden, dass die Zusatzfedereinrichtung 21 auf einer Seite der Tilgermasse 2 auf Zug und auf der anderen Seite der Tilgermasse 2 auf Druck beansprucht werden.

Die in den Fig. 1 bis 3 dargestellte Schwingungstilgeranordnung 1 kann Schwingungen in einer Richtung dämpfen, bezogen auf die Darstellungen der Fig. 1 bis 3 eine Schwingung von links nach rechts und umgekehrt.

Um auch andere Schwingungsrichtungen abdecken zu können, sind, wie in Fig. 4 dargestellt, im Turm 23 der Windenergieanlage zwei Schwingungstilgeranordnungen 1 vorgesehen. Von beiden Schwingungstilgeranordnungen 1 sind nur die Einhausungen 7 dargestellt. Die Einhausungen 7 der beiden Schwingungstilgeranordnungen 1 sind in Schwerkraftrichtung übereinander angeordnet, was daran zu erkennen ist, dass die in Schwerkraftrichtung obere Schwingungstilgeranordnung 1 die in Schwerkraftrichtung untere Schwingungstilgeranordnung 1 teilweise abdeckt.

Weiterhin sind die beiden Schwingungstilgeranordnungen 1 nicht mittig zueinander angeordnet. Die in Schwerkraftrichtung obere Schwingungstilgeranordnung ist (bezogen auf die Darstellung der Fig. 4) nach rechts gegenüber der Mitte der in Schwerkraftrichtung unteren Schwingungstilgeranordnung 1 versetzt und die in Schwerkraftrichtung untere Schwingungstilgeranordnung 1 ist in Bezug auf die Mitte der in Schwerkraftrichtung oberen Schwingungstilgeranordnung 1 nach oben (bezogen auf die Darstellung der Fig. 4) versetzt angeordnet. Die Längsrichtung der beiden Schwingungstilgeranordnungen entspricht jeweils der Ausrichtung der Schienenanordnung 6, d.h. die Schienenanordnung 6 verläuft parallel zur längeren Seite der Einhausung 7.

Diese Anordnung hat den Vorteil, dass ein Kabel 22, das einen in einer Gondel der Windenergieanlage angeordneten Generator mit einer Ableitung verbindet, im Turm 23 der Windenergieanlage mittig angeordnet werden kann.

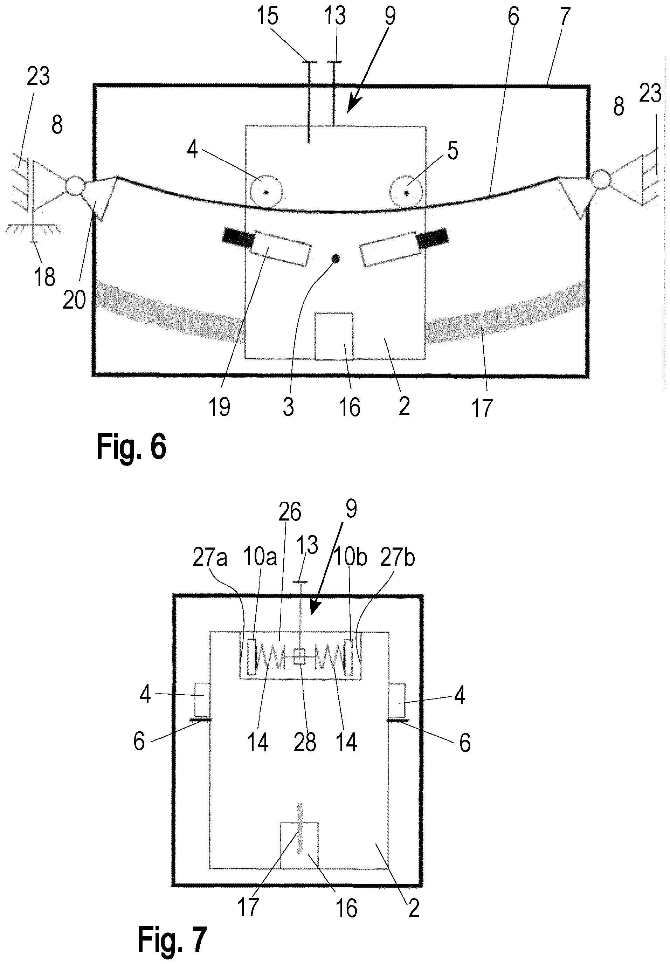

Die Fig. 6 und 7 zeigen eine abgewandelte Ausgestaltung einer Schwingungstilgeranordnung. Die Reibdämpfereinrichtung 9 weist in diesem Fall zwei Reibbelagelemente 10a, 10b auf, die in einer in der Tilgermasse 2 ausgebildeten Nut 26 angeordnet sind. Die Reibbelagelemente 10a, 10b werden von der Vorspannfederanordnung 14, die, genau wie in der Darstellung der Fig. 5, eine erste Feder 24 und eine zweite Feder 25 mit unterschiedlichen Streitigkeiten aufweisen kann, in horizontaler Richtung (bezogen auf die Schwerkraftrichtung) jeweils gegen eine Reibfläche 27a, 27b gedrückt, wenn die Reibdämpfereinrichtung 9 dämpfend mit der Tigermasse 2 zusammen wirken soll. Wenn eine derartige Dämpfung nicht erwünscht ist, können die Reibbelagelemente 10a, 10b von den Reibflächen 27a, 27b abgehoben werden, wie dargestellt.

Die Reibflächen 27a, 27b verlaufen im Wesentlichen parallel zur Schwerkraftrichtung und parallel zur Erstreckung der Schienenanordnung 6, so dass dann, wenn die Reibbelagelemente 10a, 10b mit den Reibflächen 27a, 27b reibend zusammenwirken, von den Reibbelagelementen 10a, 10b keine Kraft in Schwerkraftrichtung auf die Tilgermasse 2 ausgeübt wird. Unter ungünstigen Umständen könnte sich eine derartige Kraft in Schwerkraftrichtung in unerwünschter Weise auf das Schwingungsverhalten der Tilgermasse auswirken, so dass die Tilgerfrequenz in unzulässiger Weise verändert wird.

Eine Ankopplung der Reibbelagelemente 10a, 10b an die Einhausung 7 über eine Schwinge ist hier nicht erforderlich, da sich in Schwerkraftrichtung keine Lageänderung der Reibbelagelemente 10a, 10b ergibt, wenn die Reibbelagelemente 10a, 10b zur Anlage an die Reibflächen 27a, 27b gebracht werden.

Die Verstellvorrichtung 13 wirkt weiter von oben auf die Reibdämpfereinrichtung 9 und zwar über ein schematisch dargestelltes Richtungsänderungs-Getriebe 28, dass beispielsweise als Schneckengetriebe ausgebildet sein kann.

Die Arretiervorrichtung 15 kann auch hier verwendet werden, um die zum Stillstand gebrachte Tilgermasse 2 gegen eine weitere Bewegung zu sichern.

## Patentansprüche

1. Schwingungstilgeranordnung (1), insbesondere für hohe schlanke Bauwerke, mit einer tragenden Struktur (8), einer Tilgermasse (2), die einen Massenschwerpunkt (3) aufweist, und mit mindestens einem Rad (4, 5), mit dem die Tilgermasse (2) auf einer konkav gekrümmten, mit der tragenden Struktur (8) verbundenen Schienenanordnung (6) aus einer stabilen Mittellage heraus in zwei entgegengesetzte Richtungen verfahrbar ist,
**dadurch gekennzeichnet, dass** eine verstellbare Reibdämpfereinrichtung (9) vorgesehen ist, die zwischen einem ersten Zustand, in der sie nicht oder nur dämpfend mit der Tilgermasse (2) zusammenwirkt, und einem zweiten Zustand, in der sie eine Bewegung der Tilgermasse (2) kontrolliert zum Stillstand bringt, verstellbar ist, und
dass die Reibdämpfereinrichtung (9) eine Vorspannfederanordnung (14) aufweist, die zwischen einer Verstellvorrichtung (13) und mindestens einem Reibbelagelement (10) angeordnet ist.

2. Schwingungstilgeranordnung nach Anspruch 1, **dadurch gekennzeichnet, dass** das Reibbelagelement (10) eine nutzbare Dicke aufweist und die Vorspannfederanordnung (14) eine Federkonstante aufweist, bei der sich die Federkraft der Vorspannfederanordnung (14) zwischen einer ersten Federlänge und einer zweiten Federlänge, die eine Summe aus der ersten Federlänge und der nutzbaren Dicke ist, um weniger als 10% ändert.

3. Schwingungstilgeranordnung nach Anspruch 1 oder 2, **dadurch gekennzeichnet, dass** die Verstellvorrichtung (13) die Vorspannfederanordnung (14) in der zweiten Position überdrückt.

4. Schwingungstilgeranordnung nach einem der vorhergehenden Ansprüche, **dadurch gekennzeichnet, dass** die Vorspannfederanordnung (14) eine erste Feder (24) und eine zweite Feder (25) aufweist, die in Reihe angeordnet sind und unterschiedliche Steifigkeiten aufweisen.

5. Schwingungstilgeranordnung nach einem der Ansprüche 1 bis 3, **dadurch gekennzeichnet, dass** das mindestens eine Reibbelagelement (10) mit einer in Schwerkraftrichtung ausgerichteten Reibfläche (27a, 27b) zusammenwirkt.

6. Schwingungstilgeranordnung nach Anspruch 5, **dadurch gekennzeichnet, dass** die Tilgermasse eine Nut (26) aufweist und die Reibfläche (27a, 27b) eine Seitenwand der Nut (26) bildet.

7. Schwingungstilgeranordnung nach Anspruch 5 oder 6, **dadurch gekennzeichnet, dass** die Verstellvorrichtung (13) ein Winkelgetriebe (28), insbesondere ein Schneckengetriebe, aufweist.

8. Schwingungstilgeranordnung nach einem der vorhergehenden Ansprüche, **dadurch gekennzeichnet, dass** eine Arretiervorrichtung (15) vorgesehen ist, mit der die Tilgermasse (2) gegenüber der tragenden Struktur (8) festlegbar ist, insbesondere in mehreren unterschiedlichen Positionen.

9. Schwingungstilgeranordnung nach einem der vorhergehenden Ansprüche, **dadurch gekennzeichnet, dass** eine Neigungseinstelleinrichtung (18) vorgesehen ist, mit der eine Neigung der Schwingungstilgeranordnung (1) veränderbar ist, wobei die Schwingungstilgeranordnung insbesondere eine Einhausung (7) aufweist, die mit der tragenden Struktur (8) verbunden ist, wobei die Neigungseinstelleinrichtung (18) insbesondere auf die Einhausung wirkt.

10. Schwingungstilgeranordnung nach einem der vorhergehenden Ansprüche, **dadurch gekennzeichnet, dass** zwischen der Tilgermasse (2) und einem Endanschlag eine Anprallpufferanordnung vorgesehen ist, die eine mit der tragenden Struktur (8) verbundene Krafteinleitungseinrichtung (20) aufweist, wobei die Anprallpufferanordnung insbesondere einen Anpralldämpfer (19) aufweist und der Massenschwerpunkt (3), der Anpralldämpfer (19) und die Krafteinleitungseinrichtung (20) auf einer Linie liegen, wenn die Tilgermasse (2) die Anprallpufferanordnung erreicht, wobei die Anprallpufferanordnung bevorzugterweise einen Bremsweg definiert, der mindestens 10% der Maximalauslenkung der Tilgermasse (2) entspricht.

11. Schwingungstilgeranordnung nach einem der vorhergehenden Ansprüche, **dadurch gekennzeichnet, dass** die Tilgermasse (2) über eine Zusatzfedereinrichtung (21) mit der tragenden Struktur (8) verbunden ist.

12. Schwingungstilgeranordnung nach einem der vorhergehenden Ansprüche, **dadurch gekennzeichnet, dass** sie einen Wirbelstromdämpfer mit einer Magnetanordnung (16) und einer elektrische Leiteranordnung (17) aufweist, wobei sich die Magnetanordnung (16) und die Leiteranordnung (17) bei einer Bewegung der Tilgermasse (2) gegenüber der tragenden Struktur (8) relativ zueinander bewegen.

13. Schwingungstilgeranordnung nach einem der vorhergehenden Ansprüche, **dadurch gekennzeichnet, dass** die Schienenanordnung (6) eine erste Schienenanordnung ist, die Tilgermasse (2) eine erste Tilgermasse ist, und eine zweite Tilgermasse auf einer konkav gekrümmten, mit der tragenden Struktur verbundenen und quer zur ersten Schienenanordnung gerichteten zweiten Schienenanordnung aus einer stabilen Mittellage heraus in zwei entgegengesetzte zweite Richtungen verfahrbar ist, wobei die erste Tilgermasse und die erste Schienenanordnung in einer ersten Einhausung angeordnet sind, die zweite Tilgermasse und die zweite Schienenanordnung in einer zweiten Einhausung angeordnet sind und die erste Einhausung und die zweite Einhausung in Schwerkraftrichtung übereinander angeordnet sind.

14. Schwingungstilgeranordnung nach Anspruch 13, **dadurch gekennzeichnet, dass** die zweite Einhausung in Richtung der ersten Schienenanordnung außermittig zur ersten Einhausung angeordnet ist und/oder die erste Einhausung in Richtung der zweiten Schienenanordnung außermittig zur zweiten Einhausung angeordnet ist.

## Claims

1. Vibration absorber arrangement (1), in particular for tall slender structures, having a supporting structure (8), an absorber mass (2), which comprises a center of mass (3), and at least one wheel (4, 5), by means of which the absorber mass (2) is movable on a concavely curved rail arrangement (6), which is connected to the supporting structure (8), from a stable central position in two opposite directions,
**characterized in that** an adjustable friction damper device (9) provided, which is adjustable between a first state, in which it does not interact with the absorber mass (2) or only dampeningly, and a second state, in which it controlledly brings a movement of the absorber mass (2) to a standstill, and
that the friction damper device (9) comprises a bias spring arrangement (14), which is arranged between an adjustment device (13) and at least one friction lining element (10).

2. Vibration absorber arrangement according to claim 1, **characterized in that** the friction lining element (10) comprises a usable thickness and the bias spring arrangement (14) has a spring constant, in which a spring force of the bias spring arrangement (14) between a first spring length and a second spring length, which is a sum of the first spring length and the usable thickness, changes by less than 10%.

3. Vibration absorber arrangement according to claim 1 or 2, **characterized in that** the adjustment device (13) overpresses the bias spring arrangement (14) in the second position.

4. Vibration absorber arrangement according to any one of the preceding claims, **characterized in that** the bias spring arrangement (14) comprises a first spring (24) and a second spring (25), which are arranged in series and have different stiffnesses.

5. Vibration absorber arrangement according to any one of claims 1 to 3, **characterized in that** the at least one friction lining element (10) interacts with a friction surface (27a, 27b), which is aligned in the direction of gravity.

6. Vibration absorber arrangement according to claim 5, **characterized in that** the absorber mass comprises a groove (26) and the friction surface (27a, 27b) forms a side wall of the groove (26).

7. Vibration absorber arrangement according to claim 5 or 6, **characterized in that** the adjustment device (13) has an angular gear (28), in particular a worm gear.

8. Vibration absorber arrangement according to any one of the preceding claims, **characterized in that** a locking device (15) is provided, by means of which the absorber mass (2) is securable relative to the supporting structure (8), in particular in several different positions.

9. Vibration absorber arrangement according to any one of the preceding claims, **characterized in that** an inclination adjustment device (18) is provided, by means of which an inclination of the vibration absorber arrangement (1) is changeable, wherein the vibration absorber arrangement comprises in particular an enclosure (7), which is connected to the supporting structure (8), wherein the inclination adjustment device (18) acts in particular on the enclosure.

10. Vibration absorber arrangement according to one any one of the preceding claims, **characterized in that** between the absorber mass (2) and an end stop an impact buffer arrangement is provided, which comprises a force transmission device (20) connected to the supporting structure (8), wherein the impact buffer arrangement comprises in particular an impact damper (19) and the center of mass (3), the impact damper (19) and the force transmission device (20) lie in line when the absorber mass (2) reaches the impact buffer arrangement, wherein the impact buffer arrangement preferably defines a braking distance corresponding to at least 10% of the maximum deflection of the absorber mass (2).

11. Vibration absorber arrangement according to any one of the preceding claims, **characterized in that** the absorber mass (2) is connected to the supporting structure (8) via an auxiliary spring device (21).

12. Vibration absorber arrangement according to any one of the preceding claims, **characterized in that** it comprises an eddy current damper having a magnet arrangement (16) and an electrical conductor arrangement (17), wherein the magnet arrangement (16) and the conductor arrangement (17) upon movement of the absorber mass (2) relative to the supporting structure (8) move relative to each other.

13. Vibration absorber arrangement according to any one of the preceding claims, **characterized in that** the rail arrangement (6) is a first rail arrangement, the absorber mass (2) is a first absorber mass, and a second absorber mass is movable on a concavely curved second rail arrangement, which is connected to the supporting structure and aligned transversely to the first rail arrangement, from a stable central position in two opposite second directions, wherein the first absorber mass and the first rail arrangement are arranged in a first enclosure, the second absorber mass and the second rail arrangement are arranged in a second enclosure, and the first enclosure and the second enclosure are arranged one above the other in the direction of gravity.

14. Vibration absorber arrangement according to claim 13, **characterized in that** the second enclosure is arranged off-center with respect to the first enclosure in the direction of the first rail arrangement and/or the first enclosure is arranged off-center with respect to the second enclosure in the direction of the second rail arrangement.

## Revendications

1. Agencement amortisseur de vibrations (1), en particulier pour bâtiments hauts et fins, comprenant une structure porteuse (8), une masse d'inertie (2) présentant un centre de masse (3) et au moins une roue (4, 5) avec laquelle la masse d'inertie (2) peut se déplacer d'une position centrale stable dans deux directions opposées sur un agencement de rails (6) à courbure concave relié à la structure porteuse (8),
**caractérisé en ce qu'**il est prévu un dispositif d'amortisseur à friction réglable (9), qui est réglable entre un premier état dans lequel il n'interagit pas avec la masse d'inertie (2) ou uniquement de manière amortissante, et un deuxième état dans lequel il permet un mouvement de la masse d'inertie jusqu'à un arrêt contrôlé, et
**en ce que** le dispositif d'amortisseur à friction (9) présente un agencement de ressort de précontrainte (14) qui est agencé entre un dispositif de réglage (13) et au moins un élément de garniture de friction (10).

2. Agencement amortisseur de vibrations selon la revendication 1, **caractérisé en ce que** l'élément de garniture de friction (10) présente une épaisseur utile et l'agencement de ressort de précontrainte (14) présente une constante de ressort pour laquelle la force de ressort de l'agencement de ressort de précontrainte (14) entre une première longueur de ressort et une seconde longueur de ressort, qui est la somme de la première longueur du ressort et de l'épaisseur utile, varie de moins de 10 %.

3. Agencement amortisseur de vibrations selon la revendication 1 ou 2, **caractérisé en ce que** le dispositif de réglage (13) exerce une pression excessive sur l'agencement de ressort de précontrainte (14) dans la deuxième position.

4. Agencement amortisseur de vibrations selon l'une des revendications précédentes, **caractérisé en ce que** l'agencement de ressort de précontrainte (14) présente un premier ressort (24) et un deuxième ressort (25) agencés en série et présentant des raideurs différentes.

5. Agencement amortisseur de vibrations selon l'une des revendications 1 à 3, **caractérisé en ce qu'**au moins un élément de garniture de friction (10) coopère avec une surface de friction (27a, 27b) orientée dans le sens de la gravité.

6. Agencement amortisseur de vibrations selon la revendication 5, **caractérisé en ce que** la masse d'inertie présente une rainure (26) et la surface de friction (27a, 27b) forme une paroi latérale de la rainure (26).

7. Agencement amortisseur de vibrations selon la revendication 5 ou 6, **caractérisé en ce que** le dispositif de réglage (13) présente un engrenage angulaire (28), en particulier un engrenage à vis sans fin.

8. Agencement amortisseur de vibrations selon l'une des revendications précédentes, **caractérisé en ce qu'**il est prévu un dispositif de verrouillage (15) grâce auquel la masse d'inertie (2) peut être fixée contre la structure porteuse (8), en particulier dans plusieurs positions différentes.

9. Agencement amortisseur de vibrations selon l'une des revendications précédentes, **caractérisé en ce qu'**il est prévu un dispositif de réglage de l'inclinaison (18), grâce auquel une inclinaison de l'agencement amortisseur de vibrations peut être modifiée, l'agencement amortisseur de vibrations comportant en particulier un boîtier (7) qui est relié à la structure porteuse (8), le dispositif de réglage de l'inclinaison (18) agissant notamment sur le boîtier.

10. Agencement amortisseur de vibrations selon l'une des revendications précédentes, **caractérisé en ce qu'**entre la masse d'inertie (2) et une butée d'extrémité est prévu un agencement amortisseur de chocs qui présente un dispositif de transmission de puissance (20) relié à la structure porteuse (8), l'agencement amortisseur de chocs présentant en particulier un amortisseur de chocs (19) et le centre de masse (3), l'amortisseur de chocs (19) et le dispositif de transmission de puissance (20) se trouvant alignés lorsque la masse d'inertie (2) atteint l'agencement amortisseur de chocs, l'agencement amortisseur de chocs définissant de préférence une distance de freinage qui correspond à 10 % minimum de la déviation maximale de la masse d'inertie (2).

11. Agencement amortisseur de vibrations selon l'une des revendications précédentes, **caractérisé en ce que** la masse d'inertie (2) est reliée à la structure porteuse (8) par l'intermédiaire d'un dispositif à ressort supplémentaire (21).

12. Agencement amortisseur de vibrations selon l'une des revendications précédentes, **caractérisé en ce qu'**il présente un amortisseur de courants de Foucault avec un agencement d'aimants (16) et un agencement de conducteurs électriques (17), l'agencement d'aimants (16) et l'agencement de conducteurs (17) se déplaçant l'un par rapport à l'autre lorsque la masse d'inertie (2) se déplace par rapport à la structure porteuse (8).

13. Agencement amortisseur de vibrations selon l'une des revendications précédentes, **caractérisé en ce que** l'agencement de rails (6) est un premier agencement de rails, la masse d'inertie (2) est une première masse d'inertie, et une deuxième masse d'inertie peut être déplacée depuis une position centrale stable dans deux directions opposées secondaires sur un deuxième agencement de rails courbé de manière concave qui est relié à la structure porteuse et dirigé transversalement par rapport au premier agencement de rails, la première masse d'inertie et le premier agencement de rails étant disposés dans un premier boîtier, la deuxième masse d'inertie et le deuxième agencement de rails étant agencés dans un deuxième boîtier et le premier boîtier et le deuxième boîtier étant agencés les uns au-dessus des autres dans le sens de la gravité.

14. Agencement amortisseur de vibrations selon la revendication 13, **caractérisé en ce que** le deuxième boîtier est agencé de manière excentrée par rapport au premier boîtier en direction du premier agencement de rails et/ou le premier boîtier est agencé de manière excentrée par rapport au deuxième boîtier en direction du deuxième agencement de rails.
